# FASCICULE DE BREVET EUROPEEN

(11) **EP 4 172 006 B1**
(45) Date de publication et mention de la délivrance du brevet: **07.05.2025**
(21) Numéro de dépôt: 21746074.0
(22) Date de dépôt: 29.06.2021
(51) Int. Cl.: B60R 19/18, B60R 19/24

(54) **DISPOSITIF DE PROTECTION D'UN PANNEAU ARRIÈRE DE VÉHICULE AUTOMOBILE, EN CAS DE CHOC ARRIÈRE SUPPORTÉ PAR LE VÉHICULE**
VORRICHTUNG ZUM SCHUTZ EINER KRAFTFAHRZEUGHECKPLATTE IM FALLE EINES VOM FAHRZEUG AUFGENOMMENEN HECKAUFPRALLS
DEVICE FOR PROTECTING A MOTOR VEHICLE REAR PANEL, IN THE EVENT OF REAR IMPACT RECEIVED BY THE VEHICLE

(30) Priorité: 30.06.2020 FR 2006840
(43) Date de publication de la demande: 03.05.2023
(73) Titulaire: Stellantis Auto SAS, 78300 Poissy (FR)
(72) Inventeur: LEMAITRE, Eric, 25250 BEUTAL (FR); PRACHT, Cyril, 25400 EXINCOURT (FR)
(74) Mandataire: BCIP
(86) Numéro de dépôt international: PCT/FR2021/051192
(87) Numéro de publication internationale: WO 2022/003290

(56) Documents cités:
- DE-B3- 10 237 454
- FR-A1- 2 912 987
- FR-A1- 2 931 124
- FR-A1- 3 017 837

## Description

### Domaine technique de l'invention

La présente invention revendique la priorité de la demande française 2006840 déposée le 30 juin 2020, dont le contenu (texte, dessins et revendications) est ici incorporé par référence.

L'invention relève du domaine des sous-ensembles de carrosserie arrière d'un véhicule automobile. L'invention concerne plus particulièrement des modalités de protection d'un panneau arrière que comporte un tel sous-ensemble de carrosserie, en cas de choc arrière supporté par le véhicule.

### Art antérieur

Les véhicules automobiles sont communément équipés d'un sous-ensemble de carrosserie arrière comprenant plusieurs éléments de carrosserie qui sont fixés entre eux et/ou sur le châssis du véhicule. Selon un agencement d'un tel sous-ensemble de carrosserie, celui-ci comprend un parechoc qui est disposé à distance longitudinale à l'arrière d'un panneau arrière. Selon l'architecture du véhicule, le parechoc est placé longitudinalement plus ou moins proche du panneau arrière.

Le parechoc comporte un déformé ménageant communément un logement de réception d'une plaque de police. La plaque de police est fixée à l'intérieur du logement, en étant appliquée contre une paroi de fond du logement. La paroi de fond du logement est ménagée par le déformé du parechoc, et s'étend sensiblement suivant un plan transversal-vertical d'extension du véhicule.

Selon une architecture spécifique du véhicule, un support du déformé du parechoc recevant la plaque de police s'étend longitudinalement entre une aile du panneau arrière et le déformé du parechoc auxquels le support est fixé. L'aile du panneau arrière s'étend sensiblement parallèlement à la paroi de fond du logement et le support s'étend longitudinalement entre le parechoc et une paroi d'appui du support contre l'aile du panneau arrière.

Dans ce contexte le panneau arrière étant notamment formé d'une doublure, le parechoc s'étend à proximité longitudinale du panneau arrière, non seulement dans sa zone du logement de réception de la plaque de police mais aussi potentiellement en regard d'une paroi du panneau arrière s'étendant en contrebas de l'aile qu'il comporte.

Ceci est dès lors préjudiciable pour le panneau arrière en cas de choc arrière subi par le véhicule. En effet, une déformation du parechoc en direction du panneau arrière peut provoquer significativement sa détérioration, y compris en cas d'un choc de faible amplitude comme à titre indicatif correspondant à un choc supporté par un véhicule à basses vitesses de progression, de l'ordre de 10 km/h.

C'est pourquoi, il a été développé des dispositifs de protection du panneau arrière en cas de choc arrière subi par le véhicule, tel qu'il ressort par exemple du document FR2931124-B1 (PEUGEOT CITROEN AUTOMOBILES SA). Selon ce document, un tel dispositif de protection comporte des moyens de renfort du panneau arrière qui sont disposés en tout ou partie en des zones de fixation du panneau arrière à un ensemble de parechoc. Ceci permet ainsi de rigidifier la liaison entre le panneau arrière et l'ensemble de parechoc.

Cependant, le parechoc peut comporter un ou plusieurs reliefs s'étendant longitudinalement en saillie vers le panneau arrière. Ceci présente un risque de détérioration du panneau arrière par lesdits reliefs en cas de choc arrière supporté par le véhicule, notamment en cas d'un choc appliqué contre le parechoc.

Il en ressort qu'un problème posé réside dans la protection du panneau arrière en cas de choc arrière subi par le véhicule, vis-à-vis d'un impact provoqué par un ou plusieurs tels reliefs que comporte le parechoc et qui s'étendent longitudinalement vers le panneau arrière.

### Présentation de l'invention

Dans ce contexte, l'invention a pour objet un dispositif de protection d'un panneau arrière de véhicule automobile, en cas de choc arrière supporté par le parechoc arrière du véhicule.

Le but de l'invention est de proposer une solution pour résoudre le problème qui vient d'être exposé.

Il est notamment visé de protéger le panneau arrière vis-à-vis d'un impact pouvant être provoqué contre le panneau arrière par au moins un relief s'étendant en saillie longitudinale vers le panneau arrière, en cas de choc arrière de faible amplitude supporté par le parechoc arrière du véhicule.

Un objectif connexe de l'invention est de préserver au mieux le panneau arrière d'une dégradation en cas de choc de faible amplitude supporté par le parechoc. Il est notamment visé d'éviter dans ce cas un accroissement inopportun des coûts de réparation du véhicule auxquels la clientèle et/ou les organismes d'assurance de véhicule sont sensibles.

Un objectif connexe de l'invention est de proposer une telle solution à moindres coûts, dans le contexte d'une concurrence économique sévère dans le domaine automobile pouvant rendre rédhibitoire une solution potentielle en raison des coûts induits.

Pour se faire et synthétiquement, l'invention propose en cas de choc de faible amplitude supporté par le parechoc arrière, de provoquer un déport d'au moins un relief que comporte le parechoc par rapport au panneau arrière pour le préserver d'un impact par ledit au moins un relief.

A cet effet, le support du parechoc, notamment via son déformé recevant la plaque de police, est pourvu d'une rampe de guidage provoquant ledit déport en cas de choc supporté par le parechoc. La rampe de guidage est notamment ménagée à la base du support, en étant avantageusement inclinée vers l'avant du véhicule.

En cas d'un dit choc supporté par le parechoc, la rampe guide suivant sa pente d'inclinaison ledit au moins un relief, de préférence vers un dégagement que comporte le panneau arrière. Ledit au moins un relief est alors dirigé vers le dégagement en évitant de heurter le panneau arrière.

Le dégagement du panneau arrière est avantageusement ménagé par une paroi du panneau arrière qui s'étend en contrebas du dit support. Ladite paroi du panneau arrière est notamment inclinée vers l'avant du véhicule en prolongement de la rampe, la pente d'inclinaison de la rampe étant définie sensiblement équivalente à la pente d'inclinaison de la paroi du panneau arrière.

Ainsi dans sa généralité, un dispositif relevant de l'invention est un dispositif de protection d'un panneau arrière participant d'un sous-ensemble de carrosserie que comporte un véhicule automobile. Ledit sous-ensemble de carrosserie comprend un parechoc, ledit panneau arrière et un support de soutien du parechoc qui s'étend longitudinalement entre une aile du panneau arrière et une paroi du parechoc qui s'étendent sensiblement suivant un plan transversal-vertical. Le parechoc comporte au moins un relief qui s'étend longitudinalement en saillie vers le panneau arrière.

Dans ce contexte conformément à l'invention, le support est pourvu d'une rampe contre laquelle ledit au moins un relief est apte à prendre appui et à être guidé en déport du panneau arrière sous l'effet d'un choc supporté par le parechoc.

Ladite rampe est ménagée à la base d'une paroi d'appui du support, via laquelle le support est longitudinalement appliqué contre l'aile du panneau arrière.

Plus spécifiquement, ladite rampe s'étend transversalement en étant inclinée vers l'avant du véhicule par rapport au plan sensiblement transversal-vertical d'extension de l'aile du panneau arrière.

Avantageusement, le panneau arrière comporte un dégagement de passage dudit au moins un relief par suite de son guidage le long de la rampe.

Selon une forme de réalisation, ledit dégagement est ménagé par une paroi du panneau arrière qui s'étend transversalement en contrebas du support.

Plus particulièrement, la rampe est de préférence inclinée suivant une même pente que la pente d'inclinaison de la paroi du panneau arrière, la rampe et la paroi du panneau arrière étant ménagées en prolongement l'une de l'autre.

Selon une forme de réalisation, ledit au moins un relief est un plot de manutention du parechoc via lequel le parechoc est manipulable pour son montage sur le châssis du véhicule.

Plus particulièrement, le parechoc comporte potentiellement plusieurs dits reliefs qui sont sensiblement alignés transversalement.

Selon une forme de réalisation, ladite paroi d'appui du support est pourvue de nervures transversales réparties verticalement sur la paroi d'appui du support, via lesquelles nervures la paroi d'appui du support est longitudinalement appliquée contre l'aile du panneau arrière.

De telles nervures confortent la prise d'appui longitudinale du support contre l'aile du panneau, en renforçant leur maintien en position à l'encontre des efforts qu'ils sont susceptibles de supporter lors du guidage dudit au moins un relief de long de la rampe avantageusement intégrée au support.

L'invention a aussi pour objet un véhicule automobile comportant un sous-ensemble de carrosserie comprenant un parechoc, un panneau arrière et un support de soutien du parechoc. Le support s'étend longitudinalement entre une aile du panneau arrière et une paroi du parechoc qui s'étendent sensiblement suivant un plan transversal-vertical d'extension du véhicule. Le parechoc comporte au moins un relief qui s'étend longitudinalement en saillie vers le panneau arrière.

Dans ce contexte, un véhicule conforme à l'invention est équipé d'un dispositif de protection du panneau arrière tel qu'il vient d'être décrit.

### Présentation des figures

L'invention sera mieux comprise à la lecture de la description détaillée qui suit d'un exemple de réalisation, en relation avec les figures suivantes :
[Fig. 1] La figure 1 est un schéma illustrant en section longitudinale un sous-ensemble de carrosserie arrière d'un véhicule automobile selon un exemple de réalisation de l'invention, ledit sous-ensemble de carrosserie étant pourvu d'un dispositif de protection d'un panneau arrière qu'il comprend, en cas de choc supporté par le véhicule.
[Fig. 2] La figure 2 est composé de trois schémas (a), (b) et (c), illustrant successivement des modalités de mise en oeuvre du dispositif de protection que comporte le sous-ensemble de carrosserie schématisé sur la figure 1.

### Description détaillée de l'invention

Les figures et leurs descriptions détaillées non limitatives, exposent l'invention selon des modalités particulières qui ne sont pas restrictives quant à la portée de l'invention. Les figures et leurs descriptions détaillées d'un exemple de réalisation de l'invention peuvent servir à mieux la définir, si besoin en relation avec la description générale qui vient d'en être faite.

Sur les figures, il est au besoin fait référence à un repère orthonormé communément utilisé dans le domaine automobile pour définir les directions d'extensions d'un véhicule et/ou de ses composants et leurs positions relatives sur le véhicule. Selon ce repère orthonormé, le véhicule s'étend longitudinalement L1 entre l'avant AV1 et l'arrière AR1, transversalement T1 entre ses côtés latéraux droit et gauche, et verticalement V1 en élévation par rapport au plan de roulage du véhicule. Les notions relatives comme surplomb et ou contrebas ou autres notions relatives apparentées comme base B1 et sommet, sont typiquement définies suivant l'extension verticale V1 du véhicule par rapport à son plan de roulage au sol.

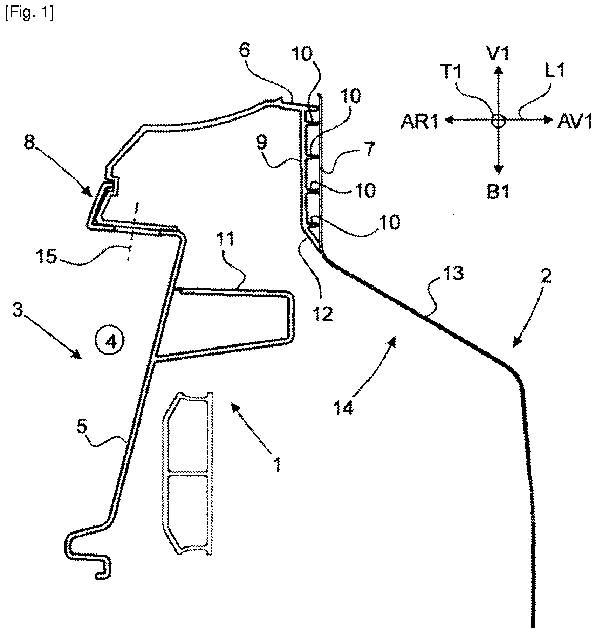

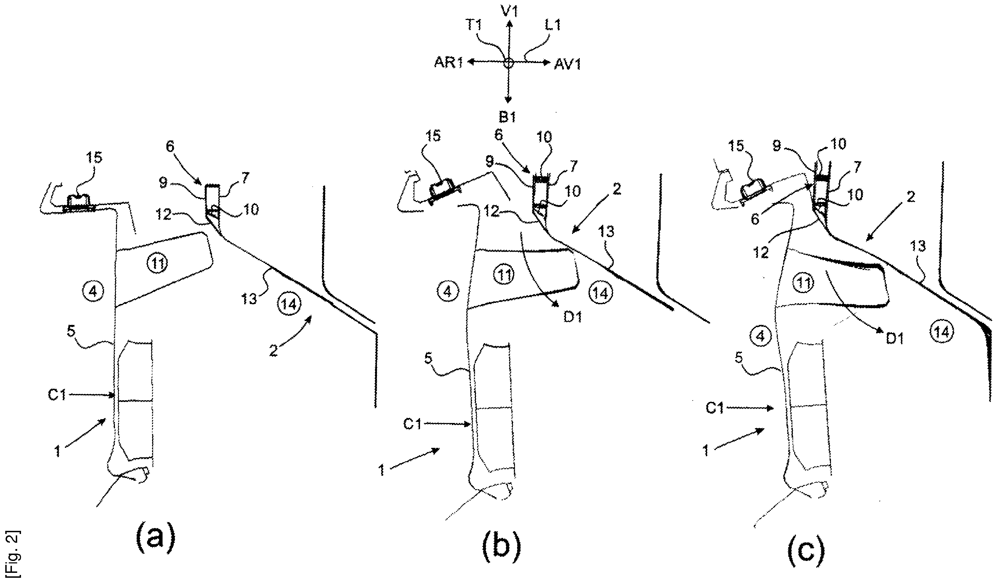

Sur la figure 1 et les schémas (a), (b) et (c) de la figure 2, un sous-ensemble de carrosserie automobile arrière d'un véhicule automobile comprend un parechoc 1 et un panneau arrière 2 qui est disposé à l'avant du parechoc 1. Le parechoc 1 comporte un déformé 3 ménageant un logement 4 de réception d'une plaque de police, qui est appliquée contre une paroi de fond 5 du logement 4.

Un support 6 de soutien du parechoc 1 s'étend longitudinalement entre une aile 7 du panneau arrière 2 et une paroi 8 du parechoc 1 qui s'étendent sensiblement suivant un plan transversal-vertical. Le support 6 comporte une paroi d'appui 9 contre l'aile 7 du panneau arrière 2 et est fixé 15 au parechoc 1 via le déformé 3 qu'il comporte.

La paroi d'appui 9 du support 6 intègre des nervures 10 transversales à sa face orientée vers l'aile 7 du panneau arrière 2. Les nervures 10 sont réparties verticalement sur la paroi d'appui 9 du support 6, en portant longitudinalement contre l'aile 7 du panneau arrière 2. De telles nervures 10 permettent de stabiliser le maintien en position et/ou en conformation du support 6 et de l'aile 7 du panneau arrière 2, notamment dans le cas où le support 6 est placé sous contrainte par suite d'un choc C1 arrière supporté par le parechoc 1, comme visé plus loin en relation avec les schémas de la figure 2.

Le parechoc 1 comporte au moins un relief 11, notamment au nombre de deux alignés transversalement, qui sont intégrés à la paroi de fond 5 du logement 4 recevant la plaque de police. Les reliefs 11 présentent chacun une conformation sensiblement tronc-pyramidale évidée, en s'étendant significativement en saillie longitudinale vers le panneau arrière 2. De tels reliefs 11 constituent notamment des plots de manutention du parechoc 1 qui sont utilisés pour manipuler le parechoc 1 sur une chaîne de montage du véhicule.

Comme illustré successivement sur les schémas de la figure 2, la présence des reliefs 11 est problématique en cas de choc C1 supporté par le parechoc 1, y compris un choc C1 de faible amplitude. En effet en cas d'un tel choc C1, une déformation même mineure du parechoc 1 tend à rompre la fixation 15 entre le support 6 et le parechoc 1 et à repousser les reliefs 11 vers le panneau arrière 2 au risque de le dégrader.

Pour éviter une dégradation du panneau arrière 2, le support 6 est pourvu d'une rampe 12 contre laquelle les reliefs 11 sont longitudinalement appliqués en cas de choc C1 arrière appliqué contre le parechoc 1. Dans le mode de réalisation des figures, la rampe 12 est ménagée à la base de la paroi d'appui 9 du support 6 contre l'aile 7 du panneau arrière 2, en s'étendant suivant un plan d'extension transversale et en étant inclinée vers le bas et l'avant du véhicule.

En cas de choc C1 subi par le parechoc 1, une prise d'appui des reliefs 11 contre la rampe 12 sous l'effet du choc provoque leur déport D1 vers le bas du véhicule, en évitant d'impacter une paroi 13 du panneau arrière 2 s'étendant en contrebas de l'aile 7 du panneau arrière 2 contre laquelle le support 6 est appliqué. Autrement dit cas de choc C1 subi par le parechoc 1, une telle rampe 12 forme un organe de guidage des reliefs 11 en déport D1 de la paroi 13 du panneau arrière 2, vers le bas du véhicule, sous l'effet d'une poussée exercée contre le parechoc 1 qui se déforme.

Pour préserver au mieux le panneau arrière 2, ladite paroi 13 du panneau arrière 2 est inclinée en prolongement de la rampe 12 suivant sensiblement de mêmes pentes d'inclinaison. Une telle inclinaison de la paroi 13 du panneau arrière 2 lui confère non seulement un agencement en rampe de glissement des reliefs 11 le long de la paroi 13 du panneau arrière 2, mais aussi permet de ménager un dégagement 14 de passage des reliefs 11 en cas de choc C1 subi par le parechoc 1.

En variante non représentée dans les figures, la rampe 12 est orientée vers l'avant du véhicule et vers le haut, de sorte qu'en cas de choc C1, la prise d'appui des reliefs 11 contre la rampe 12 sous l'effet du choc provoque leur déport D1 vers le haut du véhicule en évitant d'impacter une paroi 13.

## Revendications

1. Dispositif de protection d'un panneau arrière (2) participant d'un sous-ensemble de carrosserie que comporte un véhicule automobile, ledit sous-ensemble de carrosserie comprenant un parechoc (1), ledit panneau arrière (2) et un support (6) de soutien du parechoc (1) qui s'étend longitudinalement entre une aile (7) du panneau arrière (2) et une paroi (8) du parechoc (1) qui s'étendent sensiblement suivant un plan transversal-vertical, le parechoc (1) comportant au moins un relief (11) s'étendant longitudinalement en saillie vers le panneau arrière (2), **caractérisé en ce que** le support (6) est pourvu d'une rampe (12) qui s'étend transversalement en étant inclinée vers l'avant du véhicule par rapport au plan sensiblement transversal-vertical d'extension de l'aile (7) du panneau arrière (2) et **en ce que** ladite rampe est ménagée à la base d'une paroi d'appui (9) du support (6) via laquelle le support (6) est longitudinalement appliqué contre l'aile (7) du panneau arrière (2), contre laquelle ledit au moins un relief (11) prend appui de sorte à être guidé en déport (D1) du panneau arrière (2) sous l'effet d'un choc (C1) supporté par le parechoc (1), ledit choc rapprochant ledit parechoc (1) et le relief (11) du support (6).

2. Dispositif selon la revendication 1, **caractérisé en ce que** le panneau arrière (2) comporte un dégagement (14) de passage dudit au moins un relief (11) par suite de son guidage le long de la rampe (12).

3. Dispositif selon la revendication 2 **caractérisé en ce que** ledit dégagement (14) est ménagé par une paroi (13) du panneau arrière (2) qui s'étend transversalement en contrebas du support (6).

4. Dispositif selon les revendications 1 et 3, **caractérisé en ce que** la rampe (12) est inclinée suivant une même pente que la pente d'inclinaison de la paroi (13) du panneau arrière (2), la rampe (12) et la paroi (13) du panneau arrière (2) étant ménagées en prolongement l'une de l'autre.

5. Dispositif selon l'une quelconque des revendications 1 à 4, **caractérisé en ce que** ledit au moins un relief (11) est un plot de manutention du parechoc (1) via lequel le parechoc (1) est manipulable pour son montage sur le châssis du véhicule.

6. Dispositif selon l'une quelconque des revendications 1 à 5, **caractérisé en ce que** le parechoc (1) comporte plusieurs dits reliefs (11) qui sont sensiblement alignés transversalement.

7. Dispositif selon la revendication 1, **caractérisé en ce que** ladite paroi d'appui (9) du support (6) est pourvue de nervures (10) transversales réparties verticalement sur la paroi d'appui (9) du support (6), via lesquelles nervures (10) la paroi d'appui (9) du support (6) est longitudinalement appliquée contre l'aile (7) du panneau arrière (2).

8. Véhicule automobile comportant un sous-ensemble de carrosserie comprenant un parechoc (1), un panneau arrière (2) et un support (6) de soutien du parechoc (1) qui s'étend longitudinalement entre une aile (7) du panneau arrière (2) et une paroi (8) du parechoc (1) qui s'étendent sensiblement suivant un plan transversal-vertical d'extension du véhicule, le parechoc (1) comportant au moins un relief (11) s'étendant longitudinalement en saillie vers le panneau arrière (2), **caractérisé en ce que** le véhicule est équipé d'un dispositif de protection du panneau arrière (2) selon l'une quelconque des revendications 1 à 7.

## Patentansprüche

1. Vorrichtung zum Schutz eines Heckblechs (2), das Teil einer Karosseriebaugruppe eines Kraftfahrzeugs ist, wobei die Karosseriebaugruppe einen Stoßfänger (1), das Heckblech (2) und einen Träger (6) zum Tragen des Stoßfängers (1) umfasst, der sich in Längsrichtung zwischen einem Kotflügel (7) des Heckblechs (2) und einer Wand (8) des Stoßfängers (1) erstreckt, die sich im Wesentlichen entlang einer quer-vertikalen Ebene erstrecken, wobei der Stoßfänger (1) mindestens eine Erhöhung (11) aufweist, die sich in Längsrichtung zum Heckblech (2) hin erstreckt, **dadurch gekennzeichnet, dass** der Träger (6) mit einer Rampe (12) versehen ist, die sich quer erstreckt und dabei in Richtung der Fahrzeugfront relativ zur im Wesentlichen quer-vertikalen Erstreckungsebene des Kotflügels (7) des Heckblechs (2) geneigt ist, und dass die Rampe an der Basis einer Stützwand (9) des Trägers (6) vorgesehen ist, über die der Träger (6) in Längsrichtung gegen den Kotflügel (7) des Heckblechs (2) gedrückt wird, gegen den die mindestens eine Erhöhung (11) so anliegt, dass um unter der Einwirkung eines vom Stoßfänger (1) getragenen Aufpralls (C1) in einem Versatz (D1) vom Heckblech (2) geführt zu werden, wobei der Aufprall den Stoßfänger (1) und die Erhebung (11) näher an die Halterung (6) bringt.

2. Vorrichtung nach Anspruch 1, **dadurch gekennzeichnet, dass** die Rückwand (2) durch ihre Führung entlang der Rampe (12) einen Freiraum (14) für den Durchgang des mindestens einen Reliefs (11) aufweist.

3. Vorrichtung nach Anspruch 2, **dadurch gekennzeichnet, dass** der Freiraum (14) durch eine Wand (13) der Rückwand (2) gebildet ist, die sich quer unterhalb der Stütze (6) erstreckt.

4. Vorrichtung nach Anspruch 1 und 3, **dadurch gekennzeichnet, dass** die Rampe (12) eine Neigung aufweist, die der Neigungsneigung der Wand (13) der Rückwand (2) entspricht, wobei die Rampe (12) und die Wand (13) der Rückwand (2) in Verlängerung zueinander angeordnet sind.

5. Vorrichtung nach einem der Ansprüche 1 bis 4, **dadurch gekennzeichnet, dass** die mindestens eine Erhebung (11) ein Handhabungspolster für den Stoßfänger (1) ist, über das der Stoßfänger (1) bei seiner Montage am Fahrgestell des Fahrzeugs gehandhabt werden kann.

6. Vorrichtung nach einem der Ansprüche 1 bis 5, **dadurch gekennzeichnet, dass** der Stoßfänger (1) mehrere der Reliefs (11) aufweist, die im Wesentlichen quer ausgerichtet sind.

7. Vorrichtung nach Anspruch 1, **dadurch gekennzeichnet, dass** die Stützwand (9) des Trägers (6) mit vertikal auf der Stützwand (9) des Trägers (6) verteilten Querrippen (10) versehen ist, über die die Stützwand (9) des Trägers (6) in Längsrichtung an dem Flügel (7) der Rückwand (2) anliegt.

8. Kraftfahrzeug mit einer Karosseriebaugruppe, die einen Stoßfänger (1), ein Heckblech (2) und einen Träger (6) zum Tragen des Stoßfängers (1) umfasst, der sich in Längsrichtung zwischen einem Kotflügel (7) des Heckblechs (2) und einer Wand (8) des Stoßfängers (1) erstreckt, die sich im Wesentlichen entlang einer quer-vertikalen Erstreckungsebene des Fahrzeugs erstrecken, wobei der Stoßfänger (1) mindestens eine sich in Längsrichtung erstreckende Erhöhung (11) aufweist, die in Richtung des Heckblechs (2) vorsteht, **dadurch gekennzeichnet, dass** das Fahrzeug mit einer Vorrichtung zum Schutz des Heckblechs (2) nach einem der Ansprüche 1 bis 7 ausgestattet ist.

## Claims

1. Device for protecting a rear panel (2) forming part of a bodywork subassembly comprising a motor vehicle, said bodywork subassembly comprising a bumper (1), said rear panel (2) and a support (6) for supporting the bumper (1) which extends longitudinally between a wing (7) of the rear panel (2) and a wall (8) of the bumper (1) which extend substantially along a transverse-vertical plane, the bumper (1) comprising at least one relief (11) extending longitudinally projecting towards the rear panel (2), **characterized in that** the support (6) is provided with a ramp (12) which extends transversely while being inclined towards the front of the vehicle relative to the substantially transverse-vertical plane of extension of the wing (7) of the rear panel (2) and **in that** said ramp is provided at the base of a support wall (9) of the support (6) via which the support (6) is longitudinally applied against the wing (7) of the rear panel (2), against which said at least one relief (11) bears so as to be guided in offset (D1) from the rear panel (2) under the effect of an impact (C1) supported by the bumper (1), said impact bringing said bumper (1) and the relief (11) closer to the support (6).

2. Device according to claim 1, **characterized in that** the rear panel (2) has a clearance (14) for the passage of said at least one relief (11) as a result of its guidance along the ramp (12).

3. Device according to claim 2, **characterized in that** said clearance (14) is provided by a wall (13) of the rear panel (2) which extends transversely below the support (6).

4. Device according to claims 1 and 3, **characterized in that** the ramp (12) is inclined along the same slope as the inclination slope of the wall (13) of the rear panel (2), the ramp (12) and the wall (13) of the rear panel (2) being arranged as an extension of one another.

5. Device according to any one of claims 1 to 4, **characterized in that** said at least one relief (11) is a handling pad for the bumper (1) via which the bumper (1) can be manipulated for its mounting on the chassis of the vehicle.

6. Device according to any one of claims 1 to 5, **characterized in that** the bumper (1) comprises several said reliefs (11) which are substantially aligned transversely.

7. Device according to claim 1, **characterized in that** said support wall (9) of the support (6) is provided with transverse ribs (10) distributed vertically on the support wall (9) of the support (6), via which ribs (10) the support wall (9) of the support (6) is longitudinally applied against the wing (7) of the rear panel (2).

8. Motor vehicle comprising a bodywork subassembly comprising a bumper (1), a rear panel (2) and a support (6) for supporting the bumper (1) which extends longitudinally between a wing (7) of the rear panel (2) and a wall (8) of the bumper (1) which extend substantially along a transverse-vertical plane of extension of the vehicle, the bumper (1) comprising at least one relief (11) extending longitudinally projecting towards the rear panel (2), **characterized in that** the vehicle is equipped with a device for protecting the rear panel (2) according to any one of claims 1 to 7.
